**Europäisches Patentamt**

**European Patent Office**

**Office européen des brevets**

(19)

(11) Veröffentlichungsnummer: **0 137 916**
**B1**

# (12) EUROPÄISCHE PATENTSCHRIFT

(45) Veröffentlichungstag der Patentschrift:
21.09.88

(21) Anmeldenummer: **84107706.8**

(22) Anmeldetag: **03.07.84**

(51) Int. Cl.⁴: **C 08 F 2/18,** C 08 J 9/20,
C 08 F 12/08

(54) Verfahren zum Steuern der Grösse der Perlen bei der Herstellung von expandierbaren Styrolpolymerisaten durch Suspensionspolymerisation.

(30) Priorität: **01.09.83 DE 3331570**

(43) Veröffentlichungstag der Anmeldung:
**24.04.85 Patentblatt 85/17**

(45) Bekanntmachung des Hinweises auf die Patenterteilung:
**21.09.88 Patentblatt 88/38**

(84) Benannte Vertragsstaaten:
**BE DE FR GB IT NL SE**

(56) Entgegenhaltungen:
**DE-A-1 494 934**
**DE-A-1 745 072**
**DE-A-2 638 839**
**DE-B-1 151 117**
**DE-B-1 237 199**
**FR-A-1 360 627**
**FR-A-1 461 145**
**FR-A-2 114 695**
**GB-A-1 038 673**
**GB-A-1 049 144**
**US-A-3 192 169**

**Methoden der Organischen Chemie Houben-Weyl,
XIV/1, Seite 421, Zeilen 10-12; S. 424, 3 letzter
Abschnitt**

(73) Patentinhaber: **HÜLS AKTIENGESELLSCHAFT, -
RSP Patente / PB 15 - Postfach 13 20, D-4370
Marl 1 (DE)**

(72) Erfinder: **Rigler, Josef Karl, Dr., Helgolandstrasse
16, D-4350 Recklinghausen (DE)**
Erfinder: **Leithäuser, Horst, Dr., Langehegge 151,
D-4370 Marl (DE)**

# 0 137 916

## Beschreibung

Expandierbare oder verschäumbare Styrolpolymerisate werden im wesentlichen nach dem Verfahren der sogenannten Perlpolymerisation oder Suspensionspolymerisation in wäßriger Phase erhalten. Als Suspensionsstabilisatoren werden heute üblicherweise wasserlösliche organische Polymere verwendet, die als Schutzkolloide bezeichnet werden. Auch feinteilige Pulver wie z. B. Calcium- oder Bariumsulfat oder Calciumphosphat können zur Stabilisierung der Suspension verwendet werden. Derartige Stabilisatorsysteme werden als Pickering-Stabilisatoren bezeichnet. Eine Aufstellung von technisch eingesetzten Schutzkolloiden ist z. B. in dem Artikel von Trommsdorf und Münster in "Schildknecht": Polymer Processes Vol 29, Seite 119 bis 120 zu finden.

Der Wahl von geeigneten Schutzkolloiden kommt aus folgenden Gründen eine wesentliche Bedeutung zu:

## 1. Einstellung enger Kornverteilungen mit definierter Größe

Verschäumbare Styrolpolymerisate werden je nach Perlgröße verschiedenen Einsatzzwecken zugeführt: grobe Perlen (2,5 bis 0,8 mm) werden für die Herstellung von Isolierplatten eingesetzt, feinere Fraktionen (0,8 bis 0,4 mm Durchmesser) werden zur Herstellung von Verpackungsmaterial verwendet. Es ist daher notwendig, daß Perlen im jeweils gewünschten Korngrößenbereich in ausreichender Menge, d. h. in hoher Ausbeute, anfallen. Dabei soll der Anfall an Über- oder Unterkorn möglichst gering sein.

## 2. Niedriger Innenwassergehalt der Perlen

Bei der üblichen Suspensionspolymerisation wird bekanntlich stets eine gewisse Menge Wasser in die Perlen eingeschlossen. Polymerisate mit einem niedrigen Gehalt an eingeschlossenem Wasser weisen im aufgeschäumten Zustand eine gleichmäßige Schaumstruktur auf, die die Wärmeisolierfähigkeit der Schaumstoffplatten positiv beeinflußt. Ein möglichst niedriger Gehalt an eingeschlossenem Wasser (Innenwasser) ist daher anzustreben.

## 3. Kugelförmige Gestalt der Perlen

Bei der Suspensionspolymerisation von treibmittelfreiem Styrol werden, wegen der besseren Verarbeitbarkeit, deformierte Perlen angestrebt. Bei der Herstellung expandierbarer Styrolpolymerisate sollten die Perlen jedoch möglichst kugelförmige Gestalt besitzen.

## 4. Ausreichende Stabilität der Suspension über den gesamten Polymerisationszyklus

Die Suspension zur Herstellung von expandierbaren Styrolpolymerisaten ist noch labiler als die von treibmittelfreien Styrolpolymerisaten. Bei den heute üblichen Reaktorgrößen bis zu 100 m³ stellt der Verlust eines Ansatzes daher einen erheblichen Schaden dar. Es muß also gewährleistet sein, daß bei Störfällen die Phasentrennung so langsam vor sich geht, daß genügend Zeit bleibt, einen Polymerisationsinhibitor zuzusetzen.

Alle diese Forderungen werden von keinem bis heute bekannten Suspensionssystem gleichzeitig erfüllt. Es hat zwar nicht an Versuchen gefehlt, einen gangbaren Weg zu finden, um alle vier Anforderungen gleichzeitig zu erfüllen. Wie der bekanntgewordene Stand der Technik zeigt, hatten die Bemühungen jedoch keinen Erfolg.

In der DE-A-2 548 524 wird ein Verfahren beschrieben, wonach Suspensionsstabilisatoren eingesetzt werden, die durch radikalische Polymerisation von Styrol in Gegenwart von Polyvinylpyrrolidon hergestellt wurden.

Die DE-B2-2 510 937 beschreibt eine Methode, bei der das System anfangs im Zustand geringer Viskosität mit Tricalciumphosphat schwach stabilisiert wird, einige Stunden später erfolgt ein Nachstabilisieren mit einer wäßrigen Lösung von Polyvinylpyrrolidon.

Nach beiden Verfahren sollen Styrolpolymerisate mit geringem Innenwassergehalt erzeugt werden können. Diese Verfahren haben jedoch den Nachteil, daß die Korngröße des Polymerisates durch den Zugabezeitpunkt des organischen Schutzkolloides bestimmt wird.

Die genaue Bestimmung des Polymerisationsumsatzes bei heterogenen Gemengen, wie sie bei der Suspensionspolymerisation vorliegen, ist schwierig. Eine genaue Kenntnis des Umsatzes ist für die reproduzierbare Einstellung der Kornspektren jedoch notwendig, da die Perlgröße von der jeweiligen Viskosität der polymerisierenden Phase abhängt, bei der das Schutzkolloid zugegeben wird. Außerdem ist das Polymerisierende System etwa 2 Stunden in einem unsicheren Betriebszustand, was speziell beim Einsatz von Großreaktoren besonders nachteilig ist. Ein Störfall, z. B. ein Rührerausfall, kann besonders zu Anfang der Polymerisation, wenn die Hauptmenge an Styrol noch vorhanden ist, zu einer Zerstörung des Reaktors führen.

In der DE-B-2 049 291 wird vorgeschlagen, zwei Schutzkolloide, nämlich Polyvinylalkohol mit unterschiedlichem Hydroxilierungsgrad, einzusetzen, um einheitlich große runde Perlen zu erhalten. Wie die angegebenen Beispiele zeigen, muß dabei das Verhältnis von Styrol zu Wasser so ungünstig gewählt werden, daß das Verfahren unwirtschaftlich ist. Das Verfahren kann nicht dazu beitragen, die Korngröße der Perlen gezielt zu steuern.

Wie bereits eingangs erwähnt wurde, werden auch wasserunlösliche anorganische Pulver als Suspensionsstabilisatoren eingesetzt. Die Verwendung von Calciumphosphaten ist am gebräuchlichstens. Diese anorganischen Verbindungen werden in der Regel in Kombination mit kleineren Mengen an Emulgatoren oder Tensiden eingesetzt (Houben-Weyl, Methoden der organischen Chemie, 4 Auflage, Band XIV, Teil 1, Makromolekulare Stoffe, Seite 425). Die Anwendung dieser Systeme ist im Vergleich zu organischen Schutzkolloiden aber eingeschränkt, da eine reproduzierbare Handhabung und ein störungsfreier Verlauf der Suspensionspolymerisation nur in einem engen Bereich möglich ist. Auf Seite 422, letzter Absatz, Zeilen 6 bis 8 dieser Literaturstelle wird hierzu aufgeführt: "Es lassen sich kaum Bedingungen angeben, unter denen ein pulverförmiges Dispergiermittel einer breiteren Anwendung fähig wäre". Bei der Kombination von anorganischen Verbindungen mit Tensiden muß die optimale Dosierung exakt eingehalten werden, da sowohl Unterdosierung als auch Überdosierung des Tensides eine Koagulation des Ansatzes zur Folge haben.

Aus der französischen Patentschrift 2 079 991 ist auch bekannt, sowohl durch die Menge des Suspensionsmittels (Schutzkolloids) oder durch Variieren des Phasenverhältnisses wäßriger zu organischer Phase oder auch durch Verwenden einer Mischung aus organischen Schutzkolloid und anorganischen Suspensionsstabilisator die Form der Perlen zu verändern. Nach dieser Arbeitsweise erhält man notwendigerweise keine kugelförmigen Perlen, auch keine Perlen mit niedrigem Innenwassergehalt, weil das Suspensionsmittel nicht vor der Polymerisation der wäßrigen Phase zugesetzt wird. Beim Zugeben des Suspensionsmittels zu Beginn der Polymerisation läßt sich die Korngröße nicht reproduzierbar einstellen.

Auch das ähnliche Verfahren der US-PS 3 222 343 erfüllt nicht die geforderten Bedingungen.

Der Erfindung liegt die Aufgabe zugrunde, ein Verfahren zur Korngrößensteuerung bei der Suspensionspolymerisation von Styrol zu entwickeln, bei dem die Suspension über den gesamten Polymerisationszyklus stabil ist, expandierbare Perlen mit niedrigem Innenwassergehalt und kugelförmiger Gestalt ergibt und nach Wunsch feine oder grobe Perlfraktionen innerhalb der Korngröße von 0,41 bis 2,5 mm in hoher Ausbeute liefert.

Diese Aufgabe wird erfindungsgemäß gelöst durch ein Verfahren zum Steuern der Große der Perlen bei der Herstellung von expandierbaren Styrolpolymerisaten durch Polymerisation von Styrol allein oder im Gemisch mit Comonomeren in wäßriger Suspension in Gegenwart von organischen Schutzkolloiden und radikalbildenden Initiatoren sowie Treibmitteln, das dadurch gekennzeichnet ist, daß

- der wäßrigen Phase vor Beginn der Polymerisation solche Schutzkolloide zugesetzt werden,
- die im Temperaturbereich von 25 bis 125°C in Wasser homogen löslich sind und
- deren I-Wert 170 bis 675 bzw. deren K-Wert 30 bis 90 beträgt,
- in einem Konzentrationsbereich von 0,01 bis 0,3 Gewichtsprozent, bezogen auf die eingesetzte Wassermenge,
- wobei die Grenzflächenspannung zwischen der wäßrigen Phase und der Styrol enthaltenden Phase nicht unter 18 N/mm² abgesenkt wird,
- daß in Gegenwart eines anorganischen, in Wasser unlöslichen feinteiligen Pulvers im Gewichtsverhältnis organisches Schutzkolloid zu anorganischem Pulver zwischen 1 : 1 bis 1 : 5 polymerisiert wird,
- wobei das Gewichtsverhältnis wäßrige Phase zu organischer Phase im Bereich von 0,9 : 1 bis 1,25 : 1 liegt, und
- daß innerhalb des angegebenen Molekulargewichtsbereiches der Schutzkolloide bei angestrebtem feinerem Kornspektrum der Styrolpolymerisate höhermolekulare Schutzkolloide und bei angestrebten gröberen Kornspektrum niedermolekulare Schutzkolloide eingesetzt werden.

Vorzugsweise wird als organisches Schutzkolloid Hydroxiethylcellulose oder Polyvinylpyrrolidon verwendet. In einer weiteren bevorzugten Ausführungsform des Verfahrens wird als anorganisches, in Wasser unlösliches feinteiliges Pulver Tricalciumphosphat verwendet.

Erforderlich zum Erfolg sind demnach folgende Maßnahmen:

Die verwendeten Schutzkolloide werden vor Beginn der Polymerisation der wäßrigen Phase zugesetzt. Sie müssen im gesamten zu durchlaufenden Temperaturbereich von 25 bis 125°C in Wasser homogen löslich und wirksam sein. Sie werden in einem solchen Konzentrationsbereich eingesetzt, daß durch ihren Zusatz die Grenzflächenspannung Wasser/Styrol nicht unter 18 N/mm² abgesenkt wird. Die Grenzflächenspannung Styrol/-Wasser liegt bei 32 N/mm². Schließlich darf das Gewichtsverhältnis von wäßriger zu organischer Phase nur über 0,9 : 1 liegen; mit anderen Worten im Bereich 0,9 : 1 bis 1,25 : 1. Die organischen Schutzkolloide werden nach dem Molekulargewicht ausgewählt. Gerade dieses zuletzt genannte wesentliche Kriterium war nach den Kenntnissen des Standes der Technik nicht zu erwarten.

Es hat sich nämlich überraschenderweise herausgestellt, daß höhermolekulare Schutzkolloide ein feineres Kornspektrum ergeben als niedermolekulare Substanzen derselben makromolekularen Verbindung. Besonders überraschend dabei war der Effekt, daß auch bei Einsatz niedermolekularer Schutzkolloide ausschließlich die

3

erwünschte runde kugelförmige Perlform erhalten wird.

Aus dem Artikel von Winslow und Matreyek (Ind. Engng. Chem. 43 (1951), Seite 1108) geht nämlich hervor, daß beim Einsatz von Polyvinylalkohol als Schutzkolloid das Molgewicht gegenüber dem Hydroxilierungsgrad nur eine untergeordnete Rolle spielt. H. Wennig stellt bei seinen Untersuchungen "Zur Kolloidchemie der Perlpolymerisation- (Kunststoffe-Plastics 5 (1958), Seiten 328 bis 340) auf Seite 330 fest, daß das Molgewicht des Schutzkolloides "weder für die Grenzflächenaktivität, noch für den Emulgiervorgang noch für die Stabilität der Emulsion von Bedeutung ist".

Für das erfindungsgemäße Verfahren werden bevorzugt Hydroxiethylcellulose und Polyvinylpyrrolidon als Schutzkolloide eingesetzt und zwar deshalb, da von diesen Substanzen im Handel ohne weiteres nach dem Molekulargewicht abgestufte Fraktionen erhältlich sind. Als Maß für das Molekulargewicht wird entweder der K-Wert nach Fikentscher (Cellulosechemie 13 (1932), Seite 58), oder die reduzierte spezifische Viskosität angegeben. Sie werden in Konzentrationen zwischen 0,01 bis 0,3 Gewichtsprozent, bezogen auf die eingesetzte Menge an Wasser, insbesondere in Konzentrationen von 0,05 bis 0,15 Gewichtsprozent, verwendet. Sie sind außerdem im angegebenen Konzentrationsbereich bei den beim Polymerisationsprozeß herrschenden Temperaturen zwischen 25°C und 125°C in Wasser klar und vollständig auflösbar. Die Grenzflächenspannung zwischen Styrol und Wasser wird durch den Zusatz des Schutzkolloids nicht tiefer als auf 18 N/mm$^2$ gesenkt.

Da die käuflichen, nach dem Molgewicht abgestuften Typen der Schutzkolloide kein einheitliches Molgewicht, sondern eine Molgewichtsverteilung besitzen, ist es vorteilhaft, zur verbesserten Korngrößensteuerung als zweite Komponente ein anorganisches, in Wasser schwerlösliches Pulver zuzusetzen. An diesem feinteiligen Pulver werden bevorzugt hochmolekulare Anteile des organischen Schutzkolloides adsorbiert, so daß zur Suspensionsstabilisierung nur die gewünschte Molekulargewichtsfraktion wirksam ist. Als brauchbare Adsorbentien können z. B. feinteilige Tricalciumphosphate oder Bariumphosphat eingesetzt werden. Das Gewichtsverhältnis von organischem Schutzkolloid und anorganischem Pulver liegt zwischen 1 : 1 und 1 : 5, insbesondere zwischen 1 : 2 und 1 : 4.

Die organischen Schutzkolloide werden zusammen mit den übrigen Komponenten des Stabilisierungssystems vor Beginn der Polymerisation in die wäßrige Phase gegeben. Das Wasser sollte eine elektrische Leitfähigkeit von weniger als 0,5 µs (Mikrosiemens) aufweisen. Unter Rühren wird die organische Phase zugesetzt und anschließend aufgeheizt. Das System ist daher zu jedem Zeitpunkt der Polymerisation ausreichend stabil. Sollte der Rührer ausfallen, tritt die Trennung der wäßrigen und organischen Phase so langsam ein, daß genügend Zeit bleibt, einen Polymerisationsinhibitor zuzusetzen. Es entstehen Styrolpolymerisate, deren Innenwassergehalt außerordentlich niedrig ist. Er liegt zwischen 0,3 und 1,0 Gewichtsprozent.

Die Einstellung des gewünschten Kornspektrums kann entweder durch Einsatz definierter Molekulargewichtsfraktionen der organischen Schutzkolloide allein oder durch Abmischen und Einsatz des Gemisches von Fraktionen erfolgen. Die Konzentration sollte immer so hoch gewählt werden, daß eine ausreichende Stabilität der Suspension während des gesamten Polymerisationsverlaufes gewährleistet ist. Das Verhältnis zwischen wäßriger und organischer Phase liegt, wie bereits erwähnt, im Bereich von 0,9 : 1 bis 1,25 : 1, vorzugsweise um 1 : 1, jedoch nicht unter 1 : 1.

Ausgangsstoffe für die Herstellung der expandierbaren Styrolpolymerisate sind Styrol und Monomerengemische, die mindestens 50 Gewichtsprozent Styrol enthalten und zusätzlich ein mit Styrol copolymerisierbares Monomeres, z. B. α-Methylstyrol, p-Methylstyrol, kernhalogenierte Styrole, Acrylnitril, Ester der Acryl- oder Methacrylsäure von Alkoholen mit 1 bis 8 Kohlenstoffatomen, N-Vinylverbindungen, wie N-Vinylcarbazol oder auch geringere Mengen Butadien oder Divinylbenzol enthalten.

Die Polymerisation wird nach dem an sich bekannten Perlpolymerisationsverfahren bei Temperaturen von 80 bis 125°C durchgeführt. Sie wird in üblicher Weise mittels einer oder mehrerer radikalbildender Substanzen initiiert, wobei die üblichen Mengen von 0,2 bis 1,0, insbesondere 0,3 bis 0,6 Gewichtsprozent, bezogen auf die organische Phase verwendet werden: t-Butylperbenzoat, t-Butylperisononanat, Di-t-butylperoxid, Dibenzoylperoxid oder Mischungen derselben seien beispielsweise genannt. Die Styrolpolymerisate können außerdem organische Halogenverbindungen als Flammschutzmittel enthalten, wie die bromierten Oligomeren des Butadiens oder des Isoprens. Als typische Vertreter seien genannt: 1,2,5,6-Tetrabromcyclododecan, 1,2,5,6,9,10-Hexabromcyclododecan, bromiertes Polybutadien, mit einem Polymerisationsgrad von z. B. 3 bis 15, 1-(α,-β-Dibromäthyl)-3,4-dibromcyclohexan. Es kann vorteilhaft sein, synergistisch wirkende Substanzen, wie Di-t-butylperoxid, Poly-p-diisopropylbenzol zuzusetzen.

Als Treibmittel werden für das erfindungsgemäße Verfahren flüssige oder gasförmige organische Verbindungen verwendet, die das Styrolpolymerisat nicht lösen und deren Siedepunkt unterhalb des Erweichungspunktes des Polymerisates liegt, z. B. aliphatische Kohlenwasserstoffe, wie Propan, Butan, Pentan, Hexan, Cyclohexan oder Halogenkohlenwasserstoffe, wie Methylchlorid, Dichloriddifluormethan, Trichlormonofluormethan oder 1,2,2-Trifluor-, 1,1,2-Trichlorethan. Auch Mischungen der Treibmittel können verwendet werden. Die Treibmittel werden üblicherweise in Mengen von 2 bis 20 Gewichtsprozent, vorzugsweise 3 bis 12 Gewichtsprozent, bezogen auf die Monomeren, verwendet.

Die expandierbaren Styrolpolymerisate können außerdem Zusatzstoffe, wie Farbstoffe, Füllstoffe und Regulierungsmittel für die Schaumporosität, wie Epoxialkane, enthalten. Die expandierbaren Styrolpolymerisate liegen nach der Herstellung in Kugelform vor, und haben im allgemeinen einen Teilchendurchmesser von 0,3 bis 3 mm, vorzugsweise 0,4 bis 2,5 mm. Sie können nach den üblichen Verfahren in vorgeschäumtem Zustand durch Erhitzen in Formen, welche nicht gasdicht schließen, weiter aufgeschäumt und zu Schaumstofformkörpern versintert werden, die in ihren Ausmaßen dem Innenhohlraum der verwendeten Form entsprechen.

## 1. Beispiele:

### 1.1. Polymerisation

Die vorgemischten Mischungen aus organischem Schutzkolloid und feinteiligem Tricalciumphosphat werden in einen Rührbehälter in 100 Gewichtsteilen vollentsalztem Wasser dispergiert. Der Dispersion werden unter Rühren 100 Gewichtsteile Styrol zugegeben, in dem 0,30 Teile Dibenzoylperoxid und 0,15 Teile t-Butylperbenzoat gelöst sind. Diese Mischung wird 4 Stunden bei 90°C und 6 Stunden bei 115°C unter Rühren polymerisiert. 3 Stunden nach Erreichen von 90°C werden 7 Gewichtsteile eines Gemisches aus normal und iso-Pentan als Treibmittel zugegeben. Nach Beendigung der Polymerisation wird der Rührbehälter entleert und die Polymerisatteilchen vom Außenwasser weitgehend befreit.

### 1.2. Das Innenwasser wird folgendermaßen bestimmt:

Eine Probe des expandierbaren Polystyrols wird zur Beseitigung von Außenwasserspuren 2 Minuten mit Methanol behandelt, dann auf einer Nutsche abgesaugt und 5 Minuten mit Luft von 20°C beblasen. Die so aufbereitete Probe wird dann nach der Methode von "Karl Fischer" titriert.

### 1.3. Bestimmung des Molgewichts des Schutzkolloids:

In einem 100 ml Maßgefäß wird eine Lösung des Schutzkolloids in Wasser mit einer Konzentration von 0,002 $g/cm^3$ hergestellt. Diese Lösung wird in einem Kapillarviskosimeter gemessen und mit dem Lösungsmittel verglichen. Aus den Durchlaufzeiten durch die Kapillare wird die spezifische Viskosität bestimmt und daraus die auf die Konzentration bezogene reduzierte spezifische Viskosität bzw. der I-Wert berechnet. Es gelten folgende Definitionen für den Wert I (g/ml) in der Tabelle:

$$I = \frac{1}{\eta_{RED}} ; \quad \eta_{RED} = \eta_{SPEZ}/c, \quad \eta_{SPEZ} = \frac{t}{t_0} - 1$$

c = 0,002 $g/cm^3$ Konzentration
t = Durchlaufzeit der Lösung    durch das Kato = Durchlaufzeit des          pillarviskosi-
Lösungsmittels                meter bei 25°C

**Tabelle 1**
Korngrößensteuerung mit Hydroxiethylcellulosechargen unterschiedlichen Molekulargewichts

| Bei-spiel Nr. | HEC Menge Gew.-Tl./ 100 Gew.-Tl. Wasser | I (g/ml) | Menge TCP Gew.-Tl/ 100 Gew. Tl. Wasser | Innenw. Gew.-% | Aus-beute % [1] | Kornspektrum Gew.-% mm >2,5 | 2,0 >1,12 | 0,9 | 0,63 | 0,41 | <0,41 |
|---|---|---|---|---|---|---|---|---|---|---|---|
| E 1 | 0,12 | 675 | 0,25 | 0,83 | 94,9 | 4,3 | 32,3 | 41,5 | 14,5 | 5,2 | 1,4 | 0,8 |
| V 1 | 0,10 | 675 | 0,25 | 0,71 | 81,6 | 18,3 | 41,4 | 32,6 | 4,2 | 2,4 | 1,0 | 0,1 |
| V 2 | 0,14 | 675 | 0,25 | 1,12 | 84,3 | 0,2 | 2,4 | 10,7 | 18,6 | 34,1 | 18,5 | 15,5 |
| E 2 | 0,15 | 485 | 0,30 | 0,56 | 98,9 | 0,1 | 1,4 | 21,4 | 38,5 | 27,2 | 10,4 | 1,0 |
| V 3 | 0,12 | 485 | 0,30 | 0,76 | 75,2 | 24,2 | 38,5 | 18,7 | 10,5 | 5,7 | 1,8 | 0,6 |
| V 4 | 0,17 | 485 | 0,30 | 0,88 | 83,9 | - | 2,7 | 10,4 | 28,3 | 22,4 | 20,1 | 16,1 |
| E 3 | 0,22 | 170 | 0,35 | 0,44 | 98,0 | - | - | 1,4 | 10,5 | 50,7 | 35,4 | 2,0 |
| V 5 | 0,20 | 170 | 0,35 | 0,51 | 81,7 | - | 2,2 | 12,4 | 17,4 | 28,5 | 21,2 | 18,3 |
| V 6 | 0,25 | 170 | 0,35 | 0,72 | 84,7 | - | - | 2,3 | 18,7 | 35,3 | 28,4 | 15,3 |

[1] Gewichtsprozent im gewünschten Korngrößenbereich von 0,41 bis 2,5 mm.

NEC = Hydroxiethylcellulose, TCP = Tricalciumphosphat

Aus den in der Tabelle 1 zusammengestellten Ergebnissen geht hervor, daß je nach angestrebtem Bereich des Kornspektrums ein bestimmtes Molekulargewicht (ausgedrückt durch die spezifische Viskosität) des Schutzkolloids zu optimaler Ausbeute in dem angestrebten Korngrößenbereich führt. Die Vergleichsbeispiele zeigen, daß bei Einsatz eines Schutzkolloids mit bestimmtem Molekulargewicht und Veränderung der Konzentration die Ausbeute an verwertbarem Material im Korngrößenbereich zwischen 2,5 und 0,41 mm negativ beeinflußt wird. So kann der bei den Vergleichsversuchen V 2, V 4 und V 6 anfallende Feinanteil nicht als Wiederauflösematerial zurückgeführt werden, da die anhaftenden Mengen an Suspensionsmitteln nur schwer abzutrennen sind und damit den Folgeansatz stören. Bei den Vergleichsversuchen V 1, V 3 und V 5 sind die Perlen >1,25 mm unrund (flache Scheiben), so daß die brauchbare Ausbeute tatsächlich nur bei 40,2, 36,7 bzw. 79,5 % liegt.

**Tabelle 2**

Einsatz von Polyvinylpyrrolidonchargen unterschiedlichen Molekulargewichts

| Bei-spiel Nr. | PVP +) Menge Gew.-Tl./ 100 Gew.-Tl. Wasser | Molgew. K-Wert | Menge TCP Gew.-Tl./ 100 Gew.-Tl. Wasser | Aus-beute % ++) | Korngröße % mm | | | | | | |
|---|---|---|---|---|---|---|---|---|---|---|---|
| | | | | | >2,5 | 2,0 | 1,12 | 0,9 | 0,63 | 0,41 | <0,41 |
| E 4 | 0,10 | 90 | 0,10 | 99,8 | 0,2 | 10,4 | 48,5 | 37,5 | 2,4 | 1,0 | - |
| V 7 | 0,11 | 90 | 0,10 | 86,0 | - | 4,5 | 8,2 | 22,5 | 27,4 | 23,4 | 14,0 |
| V 8 | 0,09 | 90 | 0,10 | 80,2 | 19,4 | 48,7 | 24,5 | 3,1 | 2,3 | 1,6 | 0,4 |
| E 5 | 0,15 | 30 | 0,15 | 98,2 | - | - | 4,4 | 24,6 | 40,5 | 28,7 | 1,8 |
| V 9 | 0,16 | 30 | 0,15 | 81,6 | - | - | - | 2,7 | 34,2 | 44,7 | 18,4 |
| V 10 | 0,13 | 30 | 0,15 | 88,8 | 1,2 | 6,4 | 8,5 | 27,3 | 28,5 | 18,2 | 9,9 |

+) PVP = Polyvinylpyrrolidon
++) Gewichtsprozent im gewünschten Korngrößenbereich von 0,41 bis 2,5 mm

Der Feinanteil der Vergleichsversuche V 7 und V 9 ist analog Tabelle 1 nicht wiederverwendbar, bei den Vergleichsversuchen V 8 und V 10 treten ebenfalls unrunde Perlen ab einer Korngröße von 1,25 mm auf, so daß die brauchbare Ausbeute bei 60,8 bzw. 82,4 % liegt.

Eine einfache Methode zur Feineinstellung des Kornspektrums ergibt sich durch den Einsatz von Gemischen verschiedener Molgewichtsfraktionen. Dies wird durch die Beispiele in der folgenden Tabelle verdeutlicht:

**Tabelle 3**

Einsatz von Gemischen verschiedener Molgewichtsfraktionen von Hydroxiethylcellulose (HEC) zur Korngrößensteuerung

| Bei-spiel Nr. | Gesamt-menge HEC Gew.-Tl./ 100 Gew.-Tl. Wasser | HEC 1 Menge Gew.-Tl. | l g/ml | HEC 2 Menge Gew.-Tl. 100 Gew.-Tl. Wasser | l g/ml | Aus-beute % +) | Innenw. Gew.-% | Kornspektrum % mm | | | | | |
|---|---|---|---|---|---|---|---|---|---|---|---|---|---|
| | | | | | | | | >2,5 | 2,0 | 1,12 | 0,9 | 0,63 | 0,41 | <0,41 |
| E 6 | 0,12 | 0,09 | 675 | 0,03 | 485 | 98,8 | 0,72 | 1,2 | 74,6 | 18,5 | 4,8 | 0,9 | - | - |
| E 7 | 0,12 | 0,03 | 675 | 0,09 | 485 | 99,9 | 0,68 | 0,1 | 48,2 | 32,5 | 16,5 | 2,5 | 0,2 | - |
| E 8 | 0,27 | 0,17 | 485 | 0,10 | 170 | 99,2 | 0,45 | - | - | 8,2 | 48,5 | 39,2 | 3,3 | 0,8 |
| E 9 | 0,22 | 0,08 | 485 | 0,14 | 170 | 99,8 | 0,38 | - | - | 0,1 | 18,4 | 54,5 | 26,8 | 0,2 |

Tricalciumphosphat in allen Beispielen 0,3 Gew.-%, bezogen auf die wäßrige Phase
+) Gewichtsprozent im gewünschten Korngrößenbereich 0,41 bis 2,5 mm

Aus diesen Versuchen ist der vorteilhafte Einsatz von Gemischen aus Schutzkolloiden mit unterschiedlichem Molgewicht deutlich erkennbar. In allen Fällen liegt die Ausbeute an verwendbaren Perlen nahezu bei 100 %. Außerdem sind die Korngrößenverteilungen enger d. h. eine gewünschte Korngröße kann gezielter eingestellt werden. Die Innenfeuchten der Produkte liegen in allen Fällen unter 1 % und sind somit zufriedenstellend.

Mit den folgenden Versuchen soll die unterschiedliche Geschwindigkeit der Phasentrennung des Polymerisationsansatzes bei stehendem Rührer demonstriert werden, je nachdem ob Suspensionsmittel vorhanden sind oder nicht. Im Störfall, z. B. durch Getriebeschaden Ausfall des Rührers, muß soviel Zeit

6

bleiben, um dem System vor der Phasentrennung einen Polymerisationsstopper zuzuführen.

Dazu wurden in einem 15-l-Glaskolben 5 kg vollentsalztes Wasser vorgelegt und 5 kg Styrol (in dem die unter Beispiel 1 angegebenen Mengen an Peroxiden gelöst waren) unter Rühren zugegeben. Nach Aufheizen auf 90°C wurde 30 Minuten bei dieser Temperatur polymerisiert. Dann wurde der Rührer abgestellt und die Zeit bis zur Phasentrennung bestimmt. Der Ansatz wurde anschließend verworfen. In 3 Versuchen wurde einmal ohne Suspensionsstabilisator gearbeitet, einmal nach der Methode, wie sie in der DE-A-2 510 937 beschrieben ist (Vorpolymerisation unter Zusatz von Calciumphosphat) und schließlich nach dem Verfahren der Erfindung.

**Tabelle 4**

Dauer der Phasentrennüng bei Rührerausfall nach 30 Minuten Polymerisationszeit bei 90°C

| Schutzkolloid in der wäßrigen Phase | gemäß | Dauer der Phasentrennung in Minuten |
|---|---|---|
| ohne | | 1 |
| Tricalciumphosphat (TCP) | DE-OS 2 510 937 | 5 |
| Hydroxiethylcellulose + TCP | erfindungsgemäß | 28 |
| Polyvinylpyrrolidon + TCP | erfindungsgemäß | 30 |

Nur bei dem Verfahren der Erfindung bleibt im Ernstfall genug Zeit, einen Polymerisationsstopper zuzusetzen.

**Patentansprüche**

1. Verfahren zum Steuern der Größe der Perlen bei der Herstellung von expandierbaren Styrolpolymerisaten durch Polymerisation von Styrol allein oder im Gemisch mit Comonomeren in wäßriger Suspension in Gegenwart von organischen Schutzkolloiden und radikalbildenden Initiatoren sowie Treibmitteln,
dadurch gekennzeichnet,
daß
- der wäßrigen Phase vor Beginn der Polymerisation solche Schutzkolloide zugesetzt werden,
- die im Temperaturbereich von 25 bis 125°C in Wasser homogen löslich sind und
- deren I-Wert 170 bis 675 bzw. deren K-Wert 30 bis 90 beträgt,
- in einem Konzentrationsbereich von 0,01 bis 0,3 Gewichtsprozent, bezogen auf die eingesetzte Wassermenge,
- wobei die Grenzflächenspannung zwischen der wäßrigen Phase und der Styrol enthaltenden Phase nicht unter 18 N/mm² abgesenkt wird,
- daß in Gegenwart eines anorganischen, in Wasser unlöslichen feinteiligen Pulvers im Gewichtsverhältnis organisches Schutzkolloid zu anorganischem Pulver zwischen 1 : 1 bis 1 : 5 polymerisiert wird,
- wobei das Gewichtsverhältnis wäßrige Phase zu organischer Phase im Bereich von 0,9 : 1 bis 1,25 : 1 liegt, und
- daß innerhalb des angegebenen Molekulargewichtsbereiches der Schutzkolloide bei angestrebtem feinerem Kornspektrum der Styrolpolymerisate höhermolekulare Schutzkolloide und bei angestrebtem gröberen Kornspektrum niedermolekulare Schutzkolloide eingesetzt werden.
2. Verfahren nach Anspruch 1,
dadurch gekennzeichnet,
daß als organisches Schutzkolloid Hydroxiethylcellulose oder Polyvinylpyrrolidon verwendet wird.
3. Verfahren nach den Ansprüchen 1 und 2,
dadurch gekennzeichnet,
daß als anorganisches, in Wasser unlösliches feinteiliges Pulver Tricalciumphosphat verwendet wird.

**Claims**

1. A process for controlling the bead size in the preparation of an expandable styrene polymer by polymerising styrene, alone or mixed with one or more comonomers, in aqueous suspension in the presence of an organic protective colloid, an initiator which forms free radicals, and a propellant, characterised in that
- such a protective colloid which
- is homogeneously soluble in water in the temperature range 25 to 125°C and
- has an I value of 170 to 675 or a K value of 30 to 90
- is added to the aqueous phase, before commencement of the polymerisation,
- in a concentration range from 0.01 to 0.3 per cent by weight, relative to the amount of water employed,

- the interfacial tension between the aqueous phase and the styrene-containing phase not being reduced to below 18 N/mm², 
- in that the polymerisation is carried out in the presence of an inorganic, water-insoluble, finely divided powder in a weight ratio organic protective colloid:in organic powder from 1 : 1 to 1 : 5, 
- the weight ratio aqueous phase:organic phase being in the range 0.9 : 1 to 1.25 : 1, and 
- in that, within the specified molecular weight range for the protective colloid, a relatively high-molecular-weight protective colloid is employed if a relatively fine grain size range is intended for the styrene polymer, and a relatively low-molecular-weight protective colloid is employed if a relatively coarse grain size range is intended.

2. A process according to claim 1, characterised in that the organic protective colloid used is hydroxyethylcellulose or polyvinylpyrrolidone.

3. A process according to claim 1 or 2, characterised in that the inorganic, water-insoluble, finely divided powder used is tricalcium phosphate.

## Revendications

1. Procédé pour ajuster la taille des perles lors de la préparation de produits de polymérisation expansibles du styrène, par polymérisation de styrène seul ou en mélange avec des co-monomères, en suspension aqueuse en présence de colloïdes protecteurs organiques et d'initiateurs formateurs de radicaux, ainsi que d'agents gonflants, caractérisé par le fait:
- que l'on ajoute à la phase aqueuse, avant le début de la polymérisation, des colloïdes protecteurs
- qui sont solubles dans l'eau de manière homogène dans un domaine de température de 25 à 125° C et
- dont la valeur I est de 170 à 675 ou la valeur K est de 30 à 90,
- dans un domaine de concentration de 0,01 à 0,3 % en poids, relativement à la quantité d'eau ajoutée,
- la tension superficielle entre la phase aqueuse et la phase renfermant le styrène étant abaissée au dessous de 18 N/mm²,
- que l'on polymérise en présence d'une poudre minérale finement divisée, insoluble dans l'eau, dans une proportion pondérale de 1 : 1 à 1 : 5 entre le colloïde protecteur organique et la poudre minérale,
- le rapport pondéral entre la phase aqueuse et la phase organique se situant dans un domaine de 0,9 : 1 à 1,25 : 1, et
- qu'à l'intérieur du domaine indiqué des poids moléculaires des colloïdes protecteurs, on utilise des colloïdes protecteurs de poids moléculaire élevé lorsque l'on recherche un spectre granulométrique assez fin des produits de polymérisation du styrène et que l'on utilise des colloïdes protecteurs de bas poids moléculaire l'orsque l'on recherche un spectre granulométrique plus grossier.

2. Procédé selon la revendication 1, caractérisé par le fait que l'on utilise, comme colloïde protecteur organique, de l'hydroxy-éthyl-cellulose ou de la polyvinyl-pyrrolidone.

3. Procédé selon les revendications 1 et 2, caractérisé par le fait que l'on utilise, comme poudre minérale finement divisée, insoluble dans l'eau, du phosphate tricalcique.